# EUROPEAN PATENT SPECIFICATION

(11) **EP 1 555 462 B1**
(45) Date of publication and mention of the grant of the patent: **29.08.2007**
(21) Application number: 04106993.1
(22) Date of filing: 27.12.2004
(51) Int. Cl.: F16H 61/16, F16H 59/04

(54) **Method and control device to ensure the correct operation of a range selector in a vehicle transmission**
Verfahren und Einrichtung zur Sicherstellung der richtigen Bedienung eines Fahrbereichwählers für ein Fahrzeuggetriebe
Méthode et dispositif de contrôle pour assurer un actionnement correct du sélecteur de gamme pour une transmission de véhicule

(30) Priority: 19.01.2004 IT MI20040057
(43) Date of publication of application: 20.07.2005
(73) Proprietor: IVECO S.p.A., 10156 Torino (IT)
(72) Inventor: Magri, Gianpaolo, 80126 Napoli (IT); Moretti, Carlo, 25122 Brescia (IT)
(74) Representative: Gervasi, Gemma

(56) References cited:
- EP-A- 0 547 829
- EP-A- 1 143 172
- DE-A- 10 029 497
- DE-A- 10 152 860
- US-A- 6 109 126

## Description

This invention relates to a method and control device to ensure the correct operation of a range selector in a vehicle transmission, see for instance US 6109126 A.

Some vehicles, for example commercial or industrial vehicles, have a transmission with a large number of forward gears. A typical transmission has nine forward gears and one reverse gear RM.

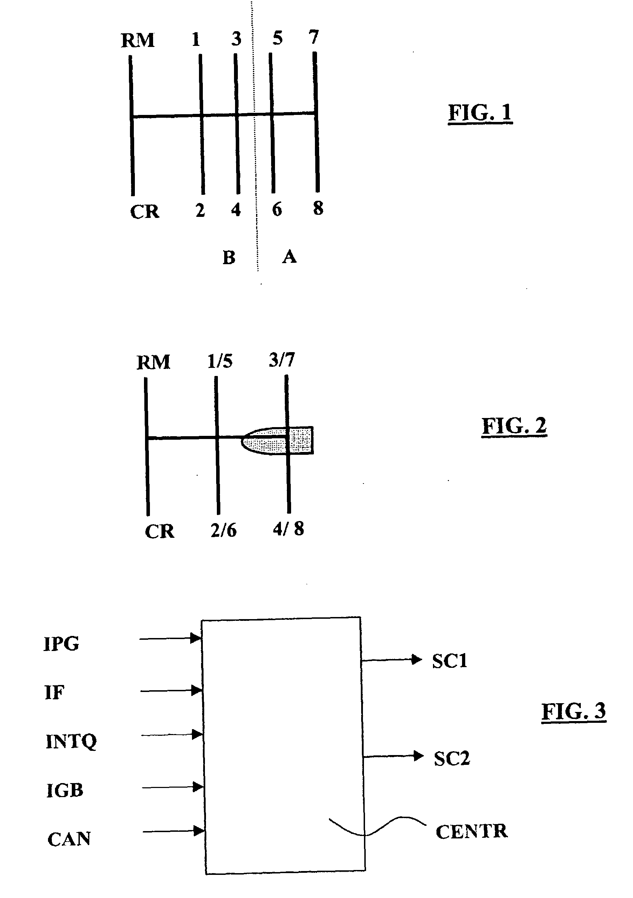

There are two basic shift patterns, the complete double-H pattern, which is illustrated in fig. 1, and the repeat-H pattern, shown in fig. 2.

In the double-H shift pattern (fig. 1), each position of the gear shift lever corresponds to a different gear. However, this solution is not ergonomically sound, in that, as shown in the diagram, the side-to-side travel of the gear shift lever is excessive for use where there is a limited amount of space said as the driver's cab.

In the repeat-H shift pattern, on the other hand, (Fig. 2) the same position is used for two gears, a reduced ratio in low range and normal ratio in high range. A device called the range selector enables the transmission to be split into two separate ranges, low range and high range.

The range selector is used to move from reduced ratios, low range L, to normal ratios, high range H, and vice versa. The range selector preferably consists of an epicycloid reduction unit operated by means of a pneumatic valve, which controls gear selection in a way that is well-known in the prior art. The range selector is operated by means of a manually-operated switch, for example on the gear shift knob assembly, and may vary in shape, according to the specific model.

The first forward gear is really only a crawler gear CR, and is not affected by the range selector; this gear is only actually used in extremely steep conditions or with particularly heavy loads and for low speed maneuvering.

Thus, apart from the reverse gear RM and crawler gear CR, the range selector divides the other eight gears into low range (1 ^{st}, 2^{nd}, 3^{rd}, 4^{th}) and high range (5^{th}, 6^{th}, 7^{th} 8^{th}). In normal conditions, the first gear that is actually used is 1^{st} and not the crawler gear. There are therefore four physical positions of the gear shift lever that correspond to two gears, 1^{st}/5^{th}, 2^{nd}/6^{th}, 3^{rd}/7^{th}, 4^{th}/8^{th} respectively, depending on the position of the range selector.

As may be seen, this solution is far more ergonomically sound, in that it results in a considerable reduction in the side-to-side gear selection movement, but on the other hand there is a risk of improper use of the range selector by the driver, which could result in incorrect shifting, especially in inadvertently downshifting through several positions to a lower ratio, e.g. from 7^{th} to 2^{nd}. This could result in serious damage to the vehicle, for example clutch explosion, in that the synchronizers would allow the attempted shift to be made, but there would be an immediate excess increase in the number of revolutions of the main shaft and subsequent centrifugation of the driven plate, or when the clutch is re-engaged there would be a sudden increase in the number of revolutions of the driving shaft, which could be seriously damaged.

Attempts to solve this problem using a maximum speed detection safety device are known in the prior art: when the vehicle exceeds a given speed (e.g. 35 km/h) the system prevents H → L downshifting. Furthermore, range shifts are only possible with the gear shift lever in neutral. However, this known system still features a number of drawbacks due to insufficient optimization of the control system, which may prevent shifting when it could actually be allowed, e.g. shifting from 5^{th} to 4^{th} gear (H → L) with the vehicle traveling at a speed only slightly above the maximum speed (e.g. 37 km/h).

The purpose of this invention is to overcome all the drawbacks described above by presenting a particularly effective and easy-to-use method and device for controlling the correct operation of a range selector in a vehicle transmission.

In particular the invention relates to a method for controlling downshifting by a range selector in a vehicle transmission characterized by the fact that it:
- always enables shifting from high range to low range at speeds of less than a minimum value (Vmin);
- only enables shifting from high range to low range at speeds above said minimum value (Vmin) from the first high range gear position above the range shift point;
- only enables shifting from high range to low range if the gear shift lever passes through the correct neutral position, coming from said first high range gear position above the range shift point.

The invention refers in particular to a method and device for controlling the correct operation of a range selector in a vehicle transmission, as specified in the claims, which are an integral part of this description.

The purposes and advantages of this invention will become clear from the following detailed description of a preferred embodiment (and the relative alternative forms of embodiment) and the drawings that are attached hereto, which are merely illustrative and not limitative, of which:
figures 1 and 2 illustrate two gear shift patterns, respectively a complete, double-H pattern and a simple repeat-H pattern;
figure 3 is a block diagram of a device to implement the method to which this invention refers;
figures 4 and 5 illustrate two views, respectively a cross-section and a front view of an example of an embodiment of a gear shift lever neutral position switch.

In the drawings the same reference numbers and letters are used to identify the same elements.

The control system to which this invention relates is described below.

The system is used to control shifting from high range to low range (H → L), as there are no risks involved in performing the reverse operation. Thus shifting from low range to high range is always possible.

The first step consists of setting a minimum speed Vmin below which range shifting is always allowed.

In one non-limiting example, with Vmin = 19 km/h, corresponding to a number of rpm of the transmission output shaft, after the clutch, with a fixed ratio in relation to engine rpm, at 440 rpm, the following values are obtained: 1 ^{st} = 3,975 rpm, 2^{nd} = 2,850 rpm, 3^{rd} = 2,060 rpm, 4^{th} = 1,560 rpm, 5^{th} = 1,121 rpm, 6^{th} = 803 rpm, 7^{th}= 582 rpm, 8^{th} = 440 rpm (ratio of 1:1 with the transmission output shaft). In these conditions, a drastic and inadvertent shift from 8^{th} to 1^{st} would result in a rapid increase in the speed of rotation of the transmission output shaft, from 440 rpm to 3,975 rpm, a condition that would not have any particularly adverse effects on the engine or gear/clutch.

The second step consists of only enabling downshifting from H → L when the vehicle is traveling at a speed of > Vmin when shifting from the first high range gear position above the range shift point (5^{th} gear in the example above).

Furthermore, in this case, if the rotational speed of the transmission output shaft is more than rpm1, e.g. 2,200, which corresponds to a second vehicle speed of more than Vmin, signaling devices, said as a flashing indicator lamp on the dashboard and/or a buzzer, are activated. In any case the range shift is permitted. If any other high range gear has been engaged (6^{th}, 7^{th}, 8^{th}) downshifting from H → L is not allowed. Furthermore, signaling devices, said as a flashing indicator lamp on the dashboard and/or a buzzer, are activated.

Furthermore, shifting from H → L is only possible if the gear shift lever passes through the correct neutral position. The driver must therefore move the gear shift lever so that this passes through the central neutral position. In this way, fig. 2, it is never possible to move directly from 5^{th} to 2^{nd}, or 5^{th} to 1^{st}, for example. The movement can therefore never be performed quickly, inadvertently or by mistake, but must be performed slowly and deliberately, for example in the event of danger to make engine braking more effective, even though said emergency action could result in serious damage to the vehicle.

A preferred but not limiting embodiment of the method is described below.

Part of a computer program is added to the control unit CENTR that manages control panel operations (known as the body controller in technical jargon), to implement the various stages of the procedure, using the programming language already used by the control unit.

The following actuators/switches are also used to supply the necessary input signals to the body controller.

A range pre-selection switch, IPG: located on the knob of the gear shift lever, of any known type, with two stable positions, high range and low range. It is operated by the driver and indicates the intention to change range.

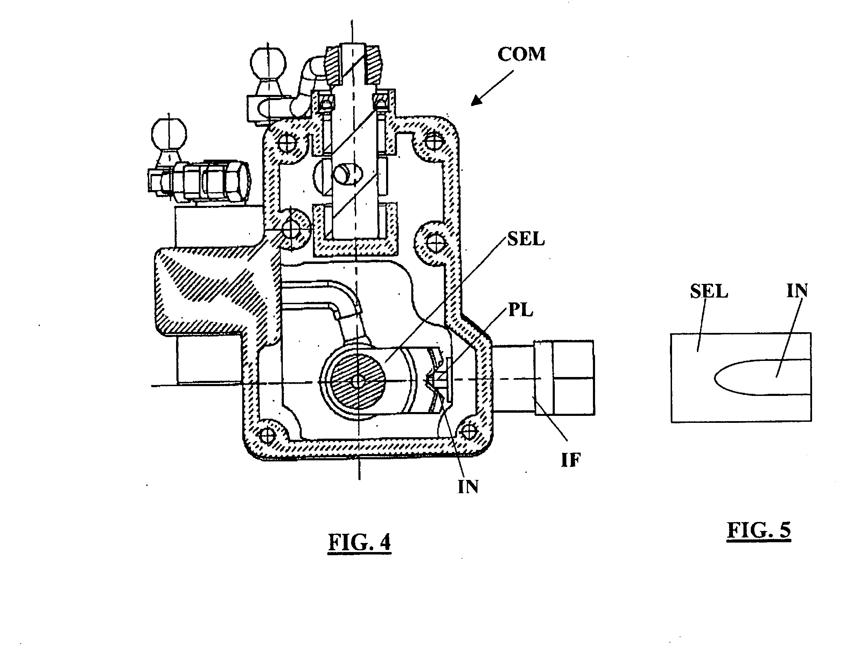

A neutral switch, IF, that indicates the neutral position. A possible embodiment is illustrated in figures 4 and 5.

A neutral switch IF is applied to an external control device COM for a transmission system. The pushbutton PL on such neutral switch IF engages against a gear selector rod SEL. The movement of the rod SEL (in the example in the drawing this is at a right angle with the plane of the drawing) corresponds to the movement of the gear shift lever in the horizontal direction of the neutral axis (fig. 2).

Along the gear selector rod SEL there is a groove IN that can house the end of the pushbutton PL of the switch, so that the pushbutton can sense two positions in the movement of the rod: one position in correspondence with the correct neutral position, at the 3/7 and 4/8 ratio position along the gear selection axis, shown in grey in fig. 2, and the other position in correspondence with an incorrect neutral position, at the 1/5 and 2/6 ratio position along the gear selection axis. In this way H → L range shifting is only enabled if the pushbutton PL is in the correct neutral position, which usually corresponds to the home position of the gear shift lever when released in neutral by the driver.

There is also a 5^{th} gear switch INTQ, which senses when the 5^{th} gear is selected, for example located inside the transmission system, in a known way. Range shifting is only enabled when changing from 5^{th} gear.

An indicator showing the number of output shaft revolutions, which gives the number of engine revolutions and the vehicle speed, since there is a fixed ratio between the number of revolutions of the output shaft and the number of wheel revolutions. Such signal is available on an existing data transmission line, called CAN (Control Area Network), coming from the body controller and in particular it supplies information about Vmin and rpm1 values.

A low range indicator switch IGB, for example located on the range selector device in any known way, that is used for instance to activate the flashing indicator lamp and buzzer.

With reference to the block diagram in figure 3, the control unit CENTR receives the input signals described above, and sends out the command signals SC1 to the solenoid valves that actuate the range selector, and the command signals SC2 for the flashing indicator lamp and buzzer signals, in accordance with the control system described above.

When the signal IPG requesting to change from H → L range is received, the control process begins.

If the line CAN indicates a speed of less than Vmin, H → L shifting is enabled and the control unit sends the signal SC1 to the solenoid valve that enables range shifting.

If the line CAN indicates a speed of more than Vmin:
- if the signal INTQ indicates fifth gear, and only if the signal IF indicates the correct neutral position, shifting from H → L range is enabled and the control unit sends the signal SC1 to the solenoid valve, which enables range shifting. In this case, if the number of revolutions of the output shaft is more than rpm1 (value present on the line CAN) and the signal IGB indicates low range, the control unit sends the signaling command signal SC2. If the signal IF indicates the incorrect neutral position, range shifting is not enabled;
- if the INTQ signal does not indicate fifth gear, which means that the request to shift from H → L sent via the signal IPG was sent with the transmission in a different position (6^{th}, 7^{th}, 8^{th}), shifting from H → L is not enabled and the control unit does not send the signal SC1 but sends the signaling command signal SC2 instead.

It will be apparent to the person skilled in the art that other alternative and equivalent embodiments of the invention can be conceived and reduced to practice without departing from the scope of the claims.

From the description set forth above it will be possible for the person skilled in the art to embody the invention without introducing any further construction details.

## Claims

1. Method for controlling shifting from high range to low range by a range selector in a vehicle transmission,
**characterized by** the following steps:
- always enabling shifting from high range to low range when the vehicle is traveling at a speed of less than a minimum value (Vmin);
- only enabling shifting from high range to low range when the vehicle is traveling at a speed of more than said minimum value (Vmin) when shifting from the first high range gear position above the range shift point;
- only enabling shifting from high range to low range if the gear shift lever passes through the correct neutral position, coming from said first high range gear position above the range shift point.

2. Method according to claim 1, **characterized in that** said downshifting is not possible from any positions in the high range section other than from said first high range gear position above the range shift point.

3. Method according to claim 2, **characterized in that** signaling devices such as flashing indicator lamps and/or a buzzer are activated.

4. Method according to claim 1, **characterized in that** when the vehicle is traveling at a speed of more than a second value in excess of said minimum value (Vmin), signaling devices such as flashing indicator lamps and/or a buzzer are activated.

5. Device to control shifting from high range to low range by a range selector in a vehicle transmission to implement the method according to any of the claims from 1 to 4, **characterized in that** it comprises:
- a range pre-selection switch (IPG), with two stable positions, high range and low range, indicating the intention to change range;
- a neutral switch (IF), that indicates the neutral position;
- a switch to indicate the first high range gear position above the range shift point (INTQ), that senses the selection of said first high range gear position above the range shift point;
- an output shaft revolution counter signal generator (CAN), that supplies information about said minimum value (Vmin) and the vehicle speed;
- a low range indicator switch (IGB);
- a control unit (CENTR) that receives the signals from said devices, and sends out command signals for said range selector, and command signals for said indicator devices, according to the method of any of claims 1 to 4.

6. Device according to claim 5, **characterized in that** said neutral switch (IF) is applied to an external control device (COM) for a transmission system, and comprises:
a pushbutton (PL) that engages against a gear selector rod (SEL) of said external control device (COM);
a groove (IN) along the gear selector rod SEL, that can house the end of the pushbutton (PL), so that the pushbutton can sense two positions in the movement of the rod: one position in correspondence with the correct neutral position, and the other position in correspondence with an incorrect neutral position.

## Patentansprüche

1. Verfahren zum Steuern des Schaltens vom hohen Fahrbereich in den niedrigen Fahrbereich durch einen Fahrbereichswähler in einem Fahrzeuggetriebe,
wobei das Verfahren durch die folgenden Schritte **gekennzeichnet** ist:
- immer Ermöglichen, dass vom hohen Fahrbereich in den niedrigen Fahrbereich geschaltet wird, wenn das Fahrzeug mit einer niedrigeren Geschwindigkeit als ein Minimalwert (Vmin) fährt;
- nur dann Ermöglichen, dass vom hohen Fahrbereich in den niedrigen Fahrbereich geschaltet wird, wenn das Fahrzeug mit einer Geschwindigkeit fährt, die höher als der genannte Minimalwert (Vmin) ist, wenn von der Stellung des ersten Gangs des hohen Fahrbereichs über den Fahrbereichsschaltpunkt geschaltet wird;
- nur dann Ermöglichen dass vom hohen Fahrbereich in den niedrigen Fahrbereich geschaltet wird, wenn der Schalthebel von der genannten Stellung des ersten Gangs des hohen Fahrbereichs kommend über den Fahrbereichsschaltpunkt durch die richtige Neutralstellung geht.

2. Verfahren gemäß Anspruch 1, **dadurch gekennzeichnet, dass** das genannte Herunterschalten von irgendwelchen anderen Stellungen in dem Abschnitt des hohen Fahrbereichs als von der genannten Stellung des ersten Gangs des hohen Fahrbereichs über dem Fahrbereichsschaltpunkt nicht möglich ist.

3. Verfahren gemäß Anspruch 2, **dadurch gekennzeichnet, dass** Signalisierungsvorrichtungen wie etwa blinkende Anzeigelampen und/oder ein Summer aktiviert werden.

4. Verfahren gemäß Anspruch 1, **dadurch gekennzeichnet, dass** die Signalisierungsvorrichtungen wie etwa blinkende Anzeigelampen und/oder ein Summer aktiviert werden, wenn das Fahrzeug mit einer Geschwindigkeit von mehr als einem zweiten Wert über dem genannten Minimalwert (Vmin) fährt.

5. Vorrichtung zum Steuern des Schaltens vom hohen Fahrbereich in den niedrigen Fahrbereich durch einen Fahrbereichswähler in einem Fahrzeuggetriebe zur Realisierung des Verfahrens gemäß einem der Ansprüche 1 bis 4, **dadurch gekennzeichnet, dass** die Vorrichtung umfasst:
- einen Fahrbereichs-Vorauswahlschalter (IPG) mit zwei stabilen Stellungen, hoher Fahrbereich und niedriger Fahrbereich, der die Absicht angibt, den Fahrbereich zu ändern;
- einen Neutralschalter (IF), der die Neutralstellung angibt;
- einen Schalter zur Angabe der Stellung des ersten Gangs des hohen Fahrbereichs über dem Fahrbereichsschaltpunkt (INTQ), der die Auswahl der genannten Stellung des ersten Gangs des hohen Fahrbereichs über dem Fahrbereichsschaltpunkt abfühlt;
- einen Abtriebswellen-Umdrehungszähler-Signalgenerator (CAN), der Informationen über den genannten Minimalwert (Vmin) und über die Fahrgeschwindigkeit liefert;
- einen Schalter des Anzeigers des niedrigen Fahrbereichs (IBG);
- eine Steuereinheit (CENTR), die gemäß dem Verfahren eines der Ansprüche 1 bis 4 die Signale von den genannten Vorrichtungen empfängt und Befehlssignale für den genannten Fahrbereichswähler sowie Befehlssignale für die genannten Anzeigevorrichtungen aussendet.

6. Vorrichtung gemäß Anspruch 5, **dadurch gekennzeichnet, dass** der genannte Neutralschalter (IF) auf eine externe Steuervorrichtung (COM) für ein Getriebesystem angewendet wird und folgendes umfasst:
einen Druckknopf (PL), der gegen die Gangauswahlstange (SEL) der genannten externen Steuervorrichtung (COM) in Eingriff gelangt;
eine Nut (IN) entlang der Gangauswahlstange SEL, in der das Ende des Druckknopfs (PL) so aufgenommen werden kann, dass der Druckknopf zwei Stellungen in der Bewegung der Stange abfühlen kann: eine Stellung, die der richtigen Neutralstellung entspricht, und die andere Stellung, die einer falschen Neutralstellung entspricht.

## Revendications

1. Procédé pour commander un changement d'une gamme haute à une gamme basse par un sélecteur de gamme dans une transmission de véhicule,
**caractérisé par** les étapes suivantes consistant à :
- toujours permettre un changement de la gamme haute à la gamme basse lorsque le véhicule se déplace à une vitesse inférieure à une valeur minimale (Vmin),
- permettre uniquement un changement de la gamme haute à la gamme basse lorsque le véhicule se déplace à une vitesse supérieure à ladite valeur minimale (Vmin) en changeant à partir de la première position d'engrenage de gamme haute au-dessus du point de changement de gamme,
- permettre uniquement un changement de la gamme haute à la gamme basse si le levier de changement de vitesse passe par la position neutre correcte, en provenant de ladite première position d'engrenage de gamme haute au-dessus du point de changement de gamme.

2. Procédé selon la revendication 1, **caractérisé en ce que** ladite rétrogradation n'est pas possible à partir d'une position quelconque dans la partie de gamme haute autre qu'à partir de ladite première position de changement d'engrenage de gamme haute au-dessus du point de changement de gamme.

3. Procédé selon la revendication 2, **caractérisé en ce que** des dispositifs de signalisation, tels que des voyants indicateurs clignotants et/ou un avertisseur sonore, sont activés.

4. Procédé selon la revendication 1, **caractérisé en ce que** lorsque le véhicule se déplace à une vitesse supérieure à une seconde valeur dépassant ladite valeur minimale (Vmin), des dispositifs de signalisation, tels que des voyants indicateurs clignotants et/ou un avertisseur sonore, sont activés.

5. Dispositif pour commander un changement de la gamme haute à la gamme basse par un sélecteur de gamme dans une transmission de véhicule pour mettre en oeuvre le procédé selon l'une quelconque des revendications 1 à 4, **caractérisé en ce qu'**il comporte :
- un commutateur de présélection de gamme (IPG), ayant deux positions stables, une gamme haute et une gamme basse, indiquant l'intention de changer de gamme,
- un commutateur neutre (IF), qui indique la position neutre,
- un commutateur pour indiquer la première position d'engrenage de gamme haute au-dessus du point de changement de gamme (INTQ), qui détecte la sélection de ladite première position d'engrenage de gamme haute au-dessus du point de changement de gamme,
- un générateur de signal de compte-tours d'arbre de sortie (CAN), qui fournit des informations sur ladite valeur minimale (Vmin) et sur la vitesse du véhicule,
- un commutateur indicateur de gamme basse (IGB),
- une unité de commande (CENTR) qui reçoit les signaux provenant desdits dispositifs, et qui émet des signaux de commande destinés audit sélecteur de gamme, et des signaux de commande destinés auxdits dispositifs indicateurs, selon le procédé de l'une quelconque des revendications 1 à 4.

6. Dispositif selon la revendication 5, **caractérisé en ce que** ledit commutateur neutre (IF) est appliqué à un dispositif de commande extérieur (COM) d'un système de transmission, et comporte :
un bouton-poussoir (PL) qui vient en contact contre une tige de sélecteur de vitesse (SEL) dudit dispositif de commande extérieur (COM),
une gorge (IN) le long de ladite tige de sélecteur de vitesse (SEL), qui peut recevoir l'extrémité du bouton-poussoir (PL), de telle sorte que le bouton-poussoir peut détecter deux positions pendant le déplacement de la tige :
une position en correspondance avec la position neutre correcte, et l'autre position en correspondance avec une position neutre incorrecte.
